# EUROPEAN PATENT APPLICATION

(11) **EP 1 821 490 A1**
(43) Date of publication of application: **22.08.2007**
(21) Application number: 06447019.8
(22) Date of filing: 15.02.2006
(51) Int. Cl.: H04L 29/06

(54) **Method for transmitting graphical data to a thin client**

(71) Applicant: IBBT vzw, 9050 Gent (BE); Universiteit Gent, 9000 Gent (BE); Hogeschool Gent, 9000 Gent (BE)
(72) Inventor: De Winter, Davy, B-9230 Massemen (BE); Moreau, Joris, B-9013 Drongen (BE); Demeester, Piet, B-9032 Wondelgem (BE); Dhoedt, Burt, B-9850 Merendree (BE); De Turck, Filip, B-9550 Steenhuize (BE)
(74) Representative: Bird, Ariane

(57) **Abstract**

A method (308,350) is described for handling graphical data of an interactive application in a network environment comprising at least one server device (102), at least one client device (104) and a network connection between the server device (102) and the client device (104). The method typically comprises setting up a session between the server device (102) and the client device (104), handling (310) the graphical data of an interactive application using a first application layer protocol, e.g. a discontinuous application layer protocol, and dynamically switching (312) between the first application layer protocol and a second application layer protocol, e.g. a continuous application layer protocol, for handling said graphical data. The dynamically switching (312) thereby is based on resource-constraints of a component of said network environment and/or properties of said graphical data. The invention furthermore relates to a client device (104) adapted for operating according to that method, a server device (102) adapted for operating according to that method and computer program products for organising the handling of the graphical data according to such a method.

## Description

### Technical field of the invention

The present invention relates to methods and systems for transmitting data in a network environment between a client and a server. More particularly, methods and systems are described for transferring graphical data in a thin client environment.

### Background of the invention

Nowadays almost every end-user has its own personal computer with an internet-connection. Typically, they have to maintain their own machine, update and install new software, upgrade the hardware from time to time, etc. Due to lack of knowledge and time to install protection-software (e.g. firewalls, virus scanners) and so-called critical updates, these machines are often vulnerable to attacks (e.g. viruses, Trojan horses, ...) and data-loss (e.g. hard disk crashes without an available backup, software-faults, ...). These problems lead to waste of time and money. Another disadvantage of such computer architectures is the limited mobility: users can take their mobile personal computer with them when they are travelling, but often these devices have only limited processing power compared to desktop PCs. Some mobile PCs however offer enough processing power to run resource-intensive applications (e.g. 3D-programs or games) but then short battery-lifetime becomes an issue soon.

Another problem associated with today's computer architectures is the spread of information and resources. A lot of business-and home users also have multiple (mobile or desktop) PCs; when they're travelling, some of their personal data can possibly reside on another PC. The only solution to have access to personal data everywhere is to upload them to a central server (e.g. a secure WWW-page) automatically, but this kind of overhead and sometimes technical schemes are to complicated to realize for most end-users.

Preferably every end-user should have access to all the programs he wants to access and to all personal data on every place, if a network connection is available, using a large collection of devices, including not only PCs, but also other mobile or fixed devices such as mobile phones, personal digital assistants (PDA), network-connected screens, projectors, terminals, etc.). The programs are (mainly) executed on a (possible central or highly distributed) server-infrastructure which can be located near the end-user or even at the other side of the world.

One such architecture may be a typical client - server architecture with a client terminal-like equipment with limited processing power, a screen, a network connection and some equipment to process user-input e.g. a touch screen, the classic mouse-and keyboard. The images that appear on the screen typically are sent from the server to the thin client device over the network-connection.

Screen-updates typically are the result from client-interaction or application progress. Each time the screen must be updated, the new information is sent to the thin client-device. A lot of work has been done in the past in order to develop thin client-protocols and architectures that are ideally suited for high-speed LAN networks (e.g. in an office-building) and applications that aren't resource-intensive. Current thin-client architectures intercept graphic updates at the software- or frame buffer level before graphic hardware acceleration (e.g. texture-mapping, video-compression) can take place.

Video-fragments rely mostly on graphic hardware- acceleration both for encoding and decoding. If one wants to use one of the classic thin-client protocols for this kind of applications, graphical hardware- acceleration has to be turned off. Due to this, the CPU typically becomes overloaded and the quality of the 3D-application images degrade significantly. Therefore, it is far more better to intercept the graphic signal after processing is done by the GPU, intercept these frames, encode them in real time to a highly compressed video stream and send this stream to a thin client.

### Summary of the invention

It is an object of the present invention to provide efficient apparatus and/or methods for handling graphical output in a thin client - server system. It is an advantage of embodiments of the present invention that efficient methods and systems for handling different types of graphical output for applications, e.g. interactive applications, in a thin client - server system are obtained. It is also an advantage of embodiments of the present invention that efficient but still user-friendly systems and methods for handling different types of graphical output for applications, e.g. interactive applications, are obtained for use in a thin client - server system. It is furthermore an advantage of particular embodiments of the present invention that transition between different types of protocol for handling the graphical output of an application can be done in a non-visible, i.e. invisible, way for the user. It is also an advantage of embodiments of the present invention that methods and systems remain compatible with different types of thin client devices. It is an advantage of particular embodiments of he present invention that switching between different types of protocol for handling the graphical output of an application can be done in an automatic way, e.g. based on the amount of graphical processing needed for the graphical output.

The above objective is accomplished by a method and device according to the present invention.

The present invention relates to a method for handling graphical data of an interactive application in a network environment comprising at least one server device, at least one client device and a network connection between said at least one server device and said at least one client device, the method comprising setting up a session between said at least one server device and said at least one client device, handling said graphical data using a first application layer protocol, and dynamically switching between said first application layer protocol and at least a second application layer protocol for handling said graphical data, said dynamical switching being based on resource-constraints of a component of said network environment and/or properties of said graphical data, wherein one of said first application layer protocol and said at least one second application layer protocol is a discontinuous application layer protocol whereas said other application layer protocol is a continuous application layer protocol.

The present invention also relates to a method for handling graphical data of an interactive application in a network environment comprising at least one server, at least one client and a network connection between said at least one server and said at least one client, the method comprising setting up a session between said at least one server device and said at least one client device, obtaining in said at least one server device graphical data of said application, selecting from at least one first application layer protocol and at least one second application layer protocol a preferred application layer protocol to be used and applying said preferred application layer protocol for handling said graphical data.

The present invention furthermore relates to a method for handling graphical data of an interactive application in a network environment comprising at least one server, at least one client and a network connection between said at least one server and said at least one client, the method comprising setting up a session between said at least one server device and said at least one client device, obtaining in said at least one client device graphical data of said application and determining from said graphical data whether a first application layer protocol or a second application layer protocol is used.

Each of the above methods, may, where applicable, comprise the specific features as set out below.

A component of said network environment may be for example the at least one server, the at least one client, a combination of the at least one server and the at least one client or the at least one network connection. It is an advantage of embodiments of the present invention that different types of application layer protocols may be used resulting in a more efficient system. Data for user interaction may be sent from the client device to the server device. It is an advantage of embodiments of the present invention that a hybrid method for handling graphical data is provided resulting in a more efficient system and allowing both streaming data and classic protocols. Any of the continuous application layer protocol or the discontinuous application layer protocol may be parameterised and adapted. For example a different compression ratio may be selected. The rather may be performed based on client feedback. It is an advantage of embodiments of the present invention that the power consumption of the client device may be reduced. Said continuous application layer protocol may be an application layer protocol allowing graphics hardware acceleration on said server device. Said continuous application layer protocol may allow sending graphical data or receiving graphical data at fixed time intervals. The latter may be independent of the amount of screen that is to be updated. Said discontinuous application layer protocol may allow sending graphical data or receiving graphical data only if the graphical data needs to be updated.

Handling said graphical data may comprise preparing and sending graphical data from a server device. The method may be performed at least at the server side.

Handling said graphical data may comprise receiving and outputting graphical data on a client device. The method may be performed at least at the client side.

Dynamically switching may comprise evaluating at least one of said resource constraints and said graphic output properties. Said resource constraints may comprise power consumption of the client device, bandwidth of the network connection, processing capacity of any of the client device and/or the server device, response time of the server device. Graphic output properties may be the number of screen updates to be performed and the amount of pixels that needs to be updated for a screen update. The graphic output properties also may comprise the amount of graphics processing required, e.g. the amount of graphics hardware acceleration.

Evaluating may comprise detecting the amount of motion present between two subsequent image related data parts of the graphical data. It is advantageous that motion detection is used for applying the dynamical switching.

Dynamically switching may be switching to a continuous application layer protocol if at least a predetermined degree of hardware acceleration is required and/or if at least a predetermined amount of motion is present between two subsequent image related data parts of the graphical data and a discontinuous application layer protocol if less than a predetermined degree of hardware acceleration is required and/or if less than a predetermined amount of motion is present between two subsequent image related data parts of the graphical data.

Dynamically switching from a first application layer protocol to a second application layer protocol may comprise synchronising said handling graphical data with said first application layer protocol and said handling graphical data with said second application layer protocol such that the dynamically switching is invisible to a user of the client device.

Making the dynamically switching invisible to the user may be performed by using the last frame of streamed data as a first image of the first data packet produced using the discontinuous application layer protocol or using the last data of the last data packet produced using the discontinuous application layer protocol as the first data of the streaming data in the continuous application layer protocol.

The present invention also relates to a client device for use in a client - server configuration, the client device being adapted for handling graphical data of an interactive application sent using any of at least one first application layer protocol or at least one second application layer protocol, wherein one of said at least one first application layer protocol and said at least one second application layer protocol is a discontinuous application layer protocol whereas said other application layer protocol is a continuous application layer protocol.

The client device comprises a means for dynamically switching during a session between the at least one first application layer protocol and the at least one second application layer protocol transparently for an end-user of the client device. Switching means adapted for switching between the at least one first application layer protocol and the at least one second application layer protocol transparently, i.e. non-visibly, for an end-user of the client device may be included in the client device.

The client device may comprise an interpretation means for allowing interpretation of which of both said first application layer protocol and said at least one second application layer protocol are used. This interpretation may be performed during the session. This interpretation may be performed repeatedly during the session

The client device may comprise a first application layer protocol data handling means and a second application layer protocol data handling means. The first application layer protocol data handling means thereby may be a discontinuous application layer protocol data handling means and the second application layer protocol data handling means is a continuous application layer protocol handling means.

The present invention furthermore relates to a server device for use in a client - server configuration, wherein the server device is adapted for handling graphical data of an interactive application and is adapted for dynamically switching between a first application-layer protocol and a second application-layer protocol for sending the graphical data, based on graphical data properties and/or resource-constraints of at least one component of the network environment. Handling graphical data may comprise preparing and sending graphical data to a client device in the network. One of said first application layer protocol and said at least one second application layer protocol thereby is a discontinuous application layer protocol whereas said other application layer protocol is a continuous application layer protocol.

The server device may comprise a driver decision module for deciding whether a first application layer protocol or a second application layer protocol is to be used.

The server device may comprise a feedback information means for providing feedback information to said driver decision module. The feedback information means may comprise a motion detection system for detecting motion between different subsequent image related data.

The feedback information means may comprise a means for detection of the amount of graphics hardware acceleration needed for handling said graphical data.

The server device may comprise a first application layer protocol means for applying a first application layer protocol to the graphical data and at least a second application layer protocol means for applying a second application layer protocol to the graphical data.

The server device may comprise a synchronisation means for synchronising graphical data handled with a first application layer protocol to subsequent graphical data handled with a second application layer protocol.

The present invention also relates to a system for performing client - server operation comprising a network, at least one client device as describe above and a server device as described above.

The present invention furthermore relates to a computer program product for organising the handling of graphical data of an interactive application in a client - server network, the computer program product comprising a means for preparing and transmitting the graphical output of a user application, wherein the means for preparing and transmitting the graphical data is adapted for preparing and transmitting the graphical data according to a first application-layer protocol and is adapted for dynamically switching to preparing and transmitting the graphical data according to a second application-layer protocol.

The present invention also relates to a computer program product for organising the handling of graphical data of an interactive application in a client - server network, the computer program product comprising a means for receiving and handling the graphical output of a user application at the client side, wherein the means for receiving and handling the graphical output is adapted for receiving and handling the graphical output according to a first application-layer protocol and is adapted for dynamically switching to receiving and handling the graphical output according to a second application layer protocol.

The present invention also relates to a machine readable data storage device comprising any of the above described computer program products or the transmission of any of the computer program products as described above over a local or wide area telecommunications network.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable servers for a thin client configuration, thin client devices for a thin client configuration and thin-client - server systems.

The teachings of the present invention permit the design of improved methods and apparatus for operating a thin client - server system.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is an example of a client - server configuration as can be used in aspects and embodiments according to the present invention.
Fig. 2 is an example of a client - server architecture indicating different software levels for handling graphical data as can be used in aspects and embodiments according to the present invention.
Fig. 3 shows an example of an architecture for a low-level graphics library protocol, as can be used in aspects and embodiments according to the present invention.
Fig. 4 shows an optimised architecture for a low-level graphics library protocol called FreeNX, as can be used in aspects and embodiments according to the present invention.
Fig. 5 shows an architecture for a continuous application-layer protocol with a separate data streaming means as can be used in aspects and embodiments according to the present invention.
Fig. 6 shows an architecture for a continuous application-layer protocol with an integrated data streaming means as can be used in aspects and embodiments according to the present invention.
Fig. 7 shows basic and optional steps of a method for handling graphical data according to a first embodiment according to the first aspect of the present invention.
Fig. 8 shows basic and optional steps of a method for handling graphical data according to a second embodiment according to the first aspect of the present invention.
Fig. 9 shows basic and optional steps of a method for handling graphical data according to a fourth embodiment according to the first aspect of the present invention.
Fig. 10 and Fig. 11 show basic and optional components of a server device according to a first embodiment of the second aspect of the present invention.
Fig. 12 shows basic and optional components of a client device according to a first embodiment of the third aspect of the present invention.

In the different figures, the same reference signs refer to the same or analogous elements.

### Definitions

The following terms are provided solely to aid in the understanding of the invention. These definitions should not be construed to have a scope less than understood by a person of ordinary skill in the art. Typically the term thin client refers to client/server applications wherein a client is designed to be especially small, e.g. as far as local storage capacity is concerned or optionally microprocessor speed, so that the bulk of the data processing occurs on the server. The term thin client in the present invention does not only refer to software but it also relates to corresponding thin client devices, such as, but not limited to, personal digital assistants (PDA), mobile phones, computing devices such as for example network computers such as Net PCs, personal computers, computer terminals or other devices that are designed to serve as client devices for client/server architectures. A thin client may be a network computing device, which for example may not comprise a hard disk drive. For data to travel through a network, it will normally be handled by a protocol stack which is typically described as several layers, all designed and co-operating together to make sure the data gets through the network intact and accurately. The present invention focuses on the application layer, as typically defined in the open system interconnection (OSI) model, although the invention is not limited thereto but relates to each protocol that provides a similar functioning. The OSI model defines a networking framework for implementing protocols in seven layers, whereby the application layer is one of them. Control typically is passed from one layer to the next, starting at the application layer in one station, proceeding to the physical layer, over the channel to the next station and proceeding again to the application layer. Typically the application layer thereby supports application and end-user processes. Communication partners thereby may be identified, quality of service may be identified, user authentication and privacy may be considered and any constraints on data syntax may be identified. Typically, everything at this layer may be application specific. In the present invention, the term application layer protocol relates to a protocol on the handling and preparing data for sending transparently it over the network from the transmission side in an end-to-end manner, including data conversion into bits and commands and the receiving, and handling data sent over the network at the receiving side. Typically a different application layer protocol is not merely a question of a user selecting a different level or type of compression, e.g. selecting and using a different encoding/decoding algorithm and a different encryption algorithm. In other words, with application layer protocol, there is meant a protocol on handling and preparing data for transmission and receiving and handling data sent, i.e. a transmission protocol, and not the user selecting properties or functionalities of the application itself. Other layers, present in the Open System Interconnection model and not being the main focus of this application, are the presentation layer that provides independence from differences in data representation, e.g. encryption, by translating from application to network format and vice versa. The presentation layer works to transform data into the form that the application layer can accept. This layer formats and encrypts data to be sent across a network. The session layer establishes, manages and terminates connections between applications. The session layer sets up, coordinates and terminates conversations, exchanges and dialogues between the applications at each end. It deals with session and connection coordination. The transport layer provides transparent transfer of data between end systems, or hosts, and is responsible for end-to-end error recovery and flow control. It ensures complete data transfer. The network layer provides switching and routing technologies, creating logical paths, known as virtual circuits, for transmitting data from node to node. Routing, addressing, internetworking, error handling, congestion control and packet sequencing are functions of this layer. The data link layer encodes and decodes data packets into bits. It furnishes transmission protocol knowledge and management and handles errors in the physical layer, flow control and frame synchronisation. The physical layer conveys the bit stream through the network at the electrical and mechanical level. It provides the hardware means for sending and receiving data on a carrier, including defining cables, cards and physical aspects.

In the present invention with discontinuous application layer protocol there is meant an application layer protocol whereby the data and/or commands are transmitted over a network in packets and whereby the transmission is performed in a discontinuous way. With a discontinuous application layer protocol there is meant that there is only sent graphical data when there is an actual update in the graphical output of an application. It thus is possible that there are no updates in the graphical output of an application, e.g. for minutes or hours, whereby no data, except for messages checking the status of the network connection, is sent. With continuous application protocol there is meant a protocol whereby a nearly continuous data input occurs, i.e. such that the data stream can be displayed in "real time" or almost "real time" compared to the creation at the server side. In a continuous application layer protocol, data, e.g. graphical data, is sent from the server at a substantially fixed time-interval, e.g. a fixed time-interval. The latter allows to generate the impression of motion. As the inter-arrival gap at the client side may depend on network delay, the definition of a continuous application layer protocol typically is made with reference to the timing for sending the data, e.g. graphical data from the server side. Typically, in a video stream, the difference between two successive frames may be sent at fixed time intervals or groups of pictures may be sent at fixed time intervals.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first and second and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

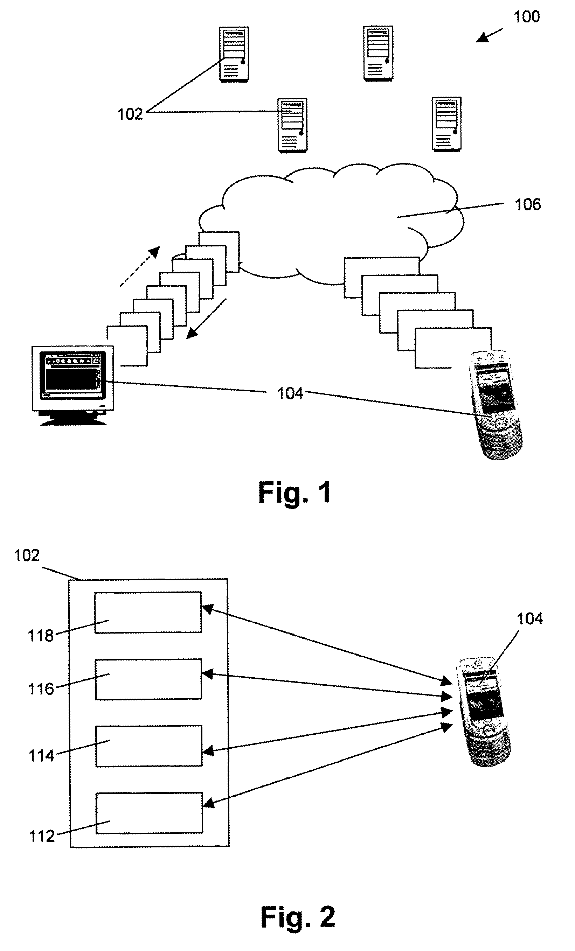

The aspects and embodiments of the present invention involve methods, systems and devices, computer related products and data signals that typically may relate to or can be used in a client - server configuration, preferably in a thin client - server configuration. By way of example, a client - server configuration is shown in Fig. 1. The client - server configuration 100 typically comprises at least one server device 102, at least one client device 104 and a network 106 allowing communication between the at least one server device 102 and the at least one client device 104. Initially a session will be set up between the server and the client which will then allow communication between the two devices at higher levels. The at least one server device 102 may be a plurality of server devices 102. A server device 102 typically is a central infrastructure that comprises a processing means, e.g. a central processing unit (CPU), allowing to run applications, e.g. to run applications on demand from a client device 104. Typically the server device 102 provides client devices 104 access to files, applications and printers as shared resources to a computer network. The server device 102 may run continuously, waiting for requests to arrive or it may be invoked by a higher level daemon controlling a number of specific servers. In the present invention the server device 102 typically may comprise an application server, thus performing an application for a requester, whereby the input and output of the application is performed on the client device 104. The client device 104 typically may be a thin client device, comprising a power source, such as for example a battery, an output interface for the user such as for example a screen, an input interface for the user, i.e. for example equipment for user-input like a keyboard or a mouse and a periphery to connect al these components together. The client furthermore typically comprises a decoding means for decoding the data received from the server. It furthermore typically may comprise some mechanism to communicate with the server. Typically, service discovery protocols also may be present to find where server devices are available and which server device 102 is the best for the client device 104, i.e. to handle at least part of the network layer for selecting a route for the message. The latter possibly may be determined based on which application is used. Furthermore, some protocol to send feedback to the server, such as e.g. RTCP protocol for controlling streaming data like streaming video, and to request other video formats or quality and protocol to translate user-input from the client device 104 to input that the server device 102 can interpret correctly. Typical examples of client devices 104 may be cellular phones, smart phones running a micro-browser, desktop devices, personal digital assistants (PDA), etc. Preferably user-interaction between the end-user of the client device 104 and the application server device 102 is provided. When a user e.g. clicks on the video-screen on his client device, the coordinates must be translated to coordinates the server interprets correctly. Therefore, the client device 104 typically may have some kind of mechanism that performs coordinate-translation. Different ways of user interaction may be possible : the client-device can have a touch screen, a keyboard, can be connected with a joystick, etc. The network 106 may be any type of network connection such as a local area network (LAN), a medium area network (MAN) or a wide area network (WAN), such as the Internet or the World Wide Web. Such a network may be a wired or wireless network. Small networks, such as LANs, may e.g. be based on infrared communication technology, e.g. based on Bluetooth or IEEE 802.11 communication standards.

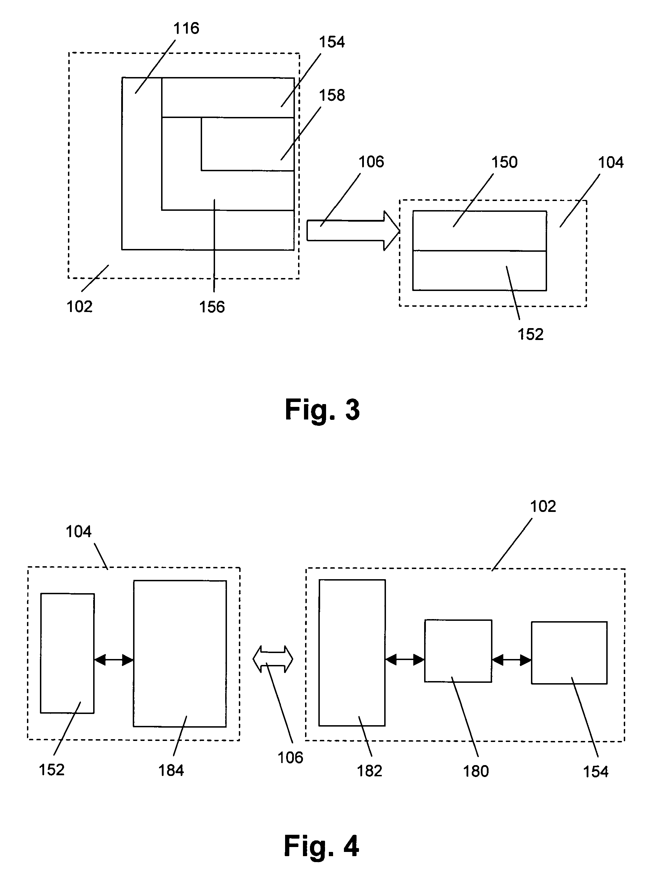

The invention involves methods, systems and devices, computer related products and data signals related to the handling of graphical data of applications in a network environment comprising at least one server, one client and a network connection between them, whereby the graphical data is transferred using different types of application-layer protocols. The applications thereby typically may be interactive applications, e.g. applications wherein a user may provide an input for the application. Graphical data of applications may refer to graphical output of an application, but e.g. also to graphical input for an application. Graphical data may comprise video data or other image-related data. Different application-layer protocols for handling graphical data exist. Typically, when classic application-layer protocols are used, graphical data can be sent to a client device using different levels of commands, e.g. using different command software levels. In other words, graphical data can be transmitted in different ways, using different levels of graphical commands, from a server device to a client device. By way of example, the invention not being limited thereto, classic thin-client application layer protocols for handling graphical data based on discontinuous transmission of data packets comprising e.g. command packets, in the art often are divided in four different groups relating to different command software levels on which graphical data can be treated, each group corresponding with transmission of graphical data using different types of commands/data. The latter is illustrated in Fig. 2, indicating different command software levels used in different application layer protocols. The different groups of application layer protocols, which will be discussed in more detail below, in this case are related to the frame buffer level 112, the video device driver level 114, the use of a low level graphics library 116 and the use of a high level graphics library 118. It is to be noticed that this division in four different groups is done by way of illustration and that other categories of classic thin client application layer protocols for handling graphical data also may applied and can be used in the embodiments of the present invention. A typical exemplary application layer protocol used for each of the four different groups will be discussed below, by way of illustration.
- A first group may be referred to as a frame-buffer application layer protocol or remote frame-buffer application layer protocol. Such an application layer protocol, which may be referred to as lowest-level architecture in the four group classification described above, captures the image-data at the frame buffer level 112 and the client device receives the graphical output as bitmap or bitmap-like information. Typical exemplary frame-buffer application layer protocols may be based on systems wherein the graphical output that needs to be displayed on the screen is written to a frame buffer. Every pixel written in the frame buffer appears directly on the screen. The function of writing to the frame buffer and displaying on the screen typically is performed by a graphical processing means, such as a graphical card. For such systems, this is the only function performed by the graphical processing device. In other words, no real graphical processing is performed. In such a thin client architecture based on a remote frame buffer (RFB) application layer protocol, the application layer protocol may be implemented by using a pseudo device driver instead of a device driver for a graphic processing means at the server-side. This pseudo driver may act like a driver for a very generic frame buffer whereby the graphic processing means and applications write all image data directly to a virtual frame buffer. The pseudo-device driver sends every new screen update to a thin client-device, typically as bitmap data. As it also may cover the packetization and compression of the image-data and hardware graphical processing means such as graphical processing units (GPU's) typically are bypassed, applications that rely on hardware graphical processing such as a multi-platform standard for high performance 2D/3D graphics like OpenGL 3-dimensional games have a rather dire image-quality. The typical amount of processing performed by the graphical processing units has recently significantly increased, i.e. typically graphical processing units are not only used for rendering but more and more for triangulation, lighting and transformation. Another disadvantage of the frame-buffer thin client protocol is that the amount of data that needs to be sent over the network may be large as most of the algorithms used are not intelligent or fine-grained enough to detect similarities between successive frames like modern video CODECs do. As a result, almost every video frame is sent as a complete bitmap over the network resulting in excessive bandwidth overhead. Remote frame-buffer based implementations, such as for example Virtual Network Computing (VNC) have the advantage that applications do not have to be modified and they are ideally suited for applications not requiring GPU-support and having few screen-updates.
- A second group of application layer protocols may be referred to as video-device application layer protocol. These application layer protocols, which may be implemented in thin client architectures such as e.g. ThiNC, typically operate at the video-device driver level 114. Just as with the remote frame buffer application layer protocol, a pseudo video device-driver is installed and the primitive drawing commands that are generic for each video device driver are intercepted before the output is written to the frame buffer. There are only five particular function-calls or basic commands, whereby one of these calls is the raw-command to draw a bitmap-image. Each call translates and packetises the data that will be sent to the thin client-device, such that the raw data is compressed in this application layer protocol. The video-device driver of the graphic processing means, e.g. graphic card, of the thin client-device has similar function-calls or basic commands. Packets arriving at the thin client device are translated into corresponding function-calls and the frame buffer image is created and displayed on the screen. Video-device application layer protocols suffer from the same shortcomings as remote frame buffer application layer protocols: when there are a lot of non-related screen-updates, most of the commands will be "raw" commands, so a lot of (compressed) images have to be sent over the network resulting in excessive delays, bad quality and huge bandwidth overhead. Similar as for remote frame buffer protocols, hardware acceleration is omitted.
- A third group of application layer protocols may be referred to as low-level graphic library application layer protocols. Such application layer protocols relate to an architecture operating one level higher than the video device driver level, i.e. it operates using a low-level graphics library 116. Such application layer protocols typically are based on the use of function calls or commands using a function library such as for example the Xlib-library. For example in the *nix-world, applications are written using the Xlib-library, comprising low-level commands. On top of such a library, widget-toolkits are often developed to make the life of a programmer easier. When a function is called from a function library such as e.g. the Xlib-library, it is translated in a network command and packetised and sent to a server adapted for handling such packetised network commands, such as e.g. an X11-server. By way of illustration, components of an example process is illustrated in Fig. 3. An adapted server 150, e.g. an X11-compatible server (e.g. Xorg, XFree86), can be local on the client device 104 or can be a remote device or on a remote device. The client device 104 furthermore typically may comprise device drivers 152. The adapted server 150 typically receives packetised network commands from the server device 102. The server device 102 using this application layer protocol typically comprises an application 154, e.g. X11-application part, a low level graphics library 116, and may comprise a toolkit 156 and a widget toolkit 158. In that way, applications are executed on the adapted server 150 and graphic commands are sent over the network to the client device 104. A typical example of such an application layer protocol is the X11-protocol. Low level graphical library application layer protocols, such as e.g. X11-protocol, are quite complicated whereby some network commands require an instant reply which slows down the application on high-latency networks and bad programming style such as ignoring certain events at the server-side can have a serious negative impact on the overall performance. Corresponding servers, such as the X11-server, must reside on the thin client device, imposing the requirement that the thin client device must have at least the processing power to run such a server. Furthermore, applications which write their output directly on the hardware, such as e.g. OpenGL applications, cannot be sent using this type of protocol, such as remote X11-protocol. The application layer protocols, e.g. X11-protocol, don't make use of extensive caching or compression techniques, thus resulting in low efficiency of the bandwidth used. They furthermore can only be used on local-area networks.
   In order to cope with some of the above mentioned problems, recently an optimised X11 protocol was developed, i.e. NX protocol, e.g. FreeNX protocol, whereby a local agent is provided on the thin client side and the server side. The latter is illustrated in Fig. 4. At the server device side 102, an NX-agent 180 functions as a virtual X11-server and applications 154 send their X11-protocol commands directly to the NX-agent 180. The NX-agent 180 is actually just a "pass-through" and translates the X11-protocol commands to NX, e.g. FreeNX, application layer protocol commands and compresses them. A remote NX-proxy 182 at the server device 102 side is used for receiving the commands from the NX-agent 180 and for transmitting the commands over the network 106 to a local NX-proxy 184 on the client device 104 side. This local NX-proxy 184 processes the NX, e.g. FreeNX, protocol commands coming from the server side and passes them with an adapted-protocol to the adapted server 152, such as with an X11-protocol to an X11-server. The NX protocol, e.g. FreeNX protocol, thereby refers to the part between the NX-agent at the server side and the NX-proxy at the client-side. Other parts typically are done using normal X11-commands. The NX, e.g. FreeNX, protocol also uses caching intensively. Commands are cached as much as possible and adaptively compressed whereby frequently used commands are sent in fewer bits than commands that are used seldom. The NX-architecture, e.g. FreeNX-architecture, has the serious drawback that again other application-logic is added (the local nxproxy) to the thin client-device. For applications which use graphic hardware acceleration and have a lot of screen-updates, the same drawbacks hold as with the other application layer protocols.
- A fourth group of application layer protocols may be referred to as high-level graphic library application layer protocols. In these application layer protocols, the architecture is such that graphic commands are sent at a high software command level, using a high-level graphics library 118. Applications are often programmed using widget-toolkits, such as e.g. the Gimp toolkit or other graphical user interface toolkits used for GIMP and GNOME (GTK) in the Linux-world. These are high-level, often object-oriented, libraries to draw complicated GUIs. In contrast to lower-level libraries such as Xlib previously discussed, these libraries provide methods for drawing combo boxes, buttons, window, tables, etc. When an application at the server-side draws such objects, a corresponding network command is sent to the thin client instead of drawing it directly at the local display. The thin client intercepts the commands and executes at this high level the corresponding drawing command finally resulting in a frame buffer-update. An example architecture is the GGI-toolkit which has a teleportal-function. The problem with this kind of architecture is that it is mostly non-portable, i.e. all applications must be written using the same toolkit to be compatible with a specific thin client-device. The application layer protocol can also be very complex if one takes the high number of primitive operations into account and it is not easy to manage. A last big disadvantage is that the thin client must have a graphical processing unit (GPU) and other components, which bypasses actually the concept of a real thin client just as with the low-level graphic library thin client protocols , e.g. X11-protocol.

Whereas the former application layer protocols, also referred to as classic application layer protocols, can be described as discontinuous application layer protocols, the following application layer protocol typically can be described as a continuous application layer protocol. Such a protocol typically is adapted for handling the graphical data of an application using hardware support. Such hardware support may comprise hardware graphics acceleration. Such a protocol thus may be far more suited for handling applications requiring graphics processing hardware means support, e.g. graphics processing unit hardware support, such as required in many games. According to such an application layer protocol, the architecture captures the graphical output at the server side after it is processed by the graphic processing means, e.g. a graphical processing unit GPU, and processes this graphical output in real time to a video stream. For processing the video stream in real time, typical encoder/decoder (CODEC) algorithms may be used. Such a CODEC may be a software implemented CODEC or a hardware implemented CODEC. Typical examples of such CODECs are the standards provided by the Motion Picture Experts Group (MPEG), such as e.g. MPEG-1 referring to ISO/IEC standard 11172, MPEG-2 referring to ISO/IEC standard 13818, MPEG-4 referring to ISO/IEC 14496 and the standards H.263 and H.264, being International Telecommunications Union standards. MPEG-4 Part 10 and H.264 are technically identical CODECs, written by the Joint Video Team. The technology used is known as Advanced Video Coding. Using a continuous application layer protocol it is possible to stream standard programs such as MS office applications, text processing applications, worksheet applications, virus detection applications but also applications requiring more hardware graphics processing such as 3-dimensional applications and multimedia applications like e.g. video.

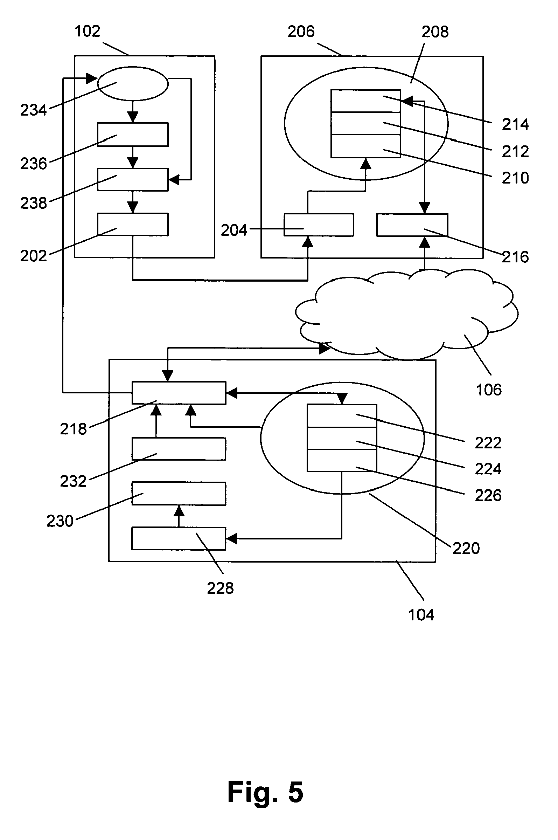

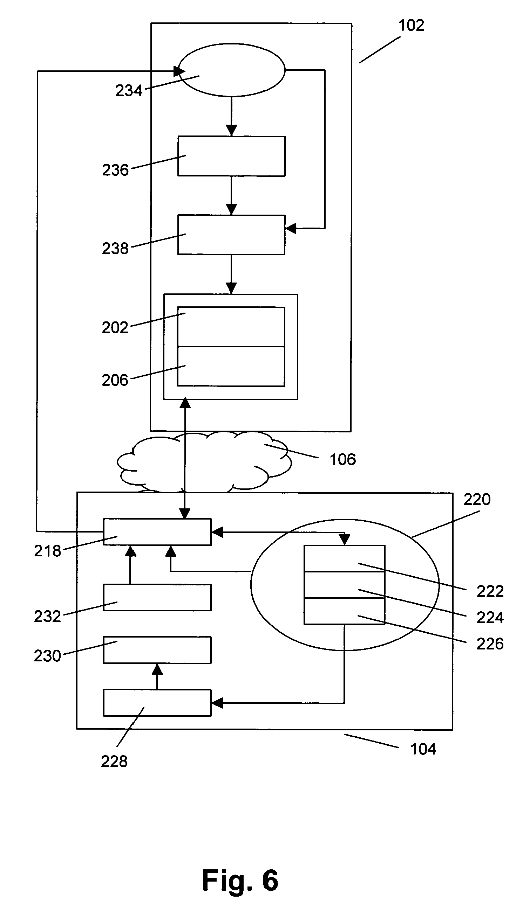

By way of illustration, architectures for two exemplary continuous application layer protocols are illustrated in Fig. 5 and Fig. 6. Fig. 5 illustrates an architecture 200 with a separate data streaming means 206. The output of the graphic acceleration means 202 such as a graphic acceleration card of a server device 102 is sent directly to a frame grabber 204 in a data streaming means 206 which captures a limited number of frames per second. These frames are in real-time encoded by a software-encoder or a hardware-encoder, which may be referred to as the data streamer hardware 208 comprising a data input means 210, a real-time data encoding means 212 and a means for packetisation 214, e.g. controlled real time packetisation. The data prepared for streaming in the data streaming means 206 is via a network interface 216 streamed over a wired or wireless network connection 106 to a network interface 218 of a client-device 104 capable of decoding a data stream. The client device 104 typically comprises means for decoding a data stream 220 comprising a means for depacketisation 222, a means for decoding 224 and a data output means 226 that may communicate with a frame buffer 228 thus providing input for a screen 230. The client device furthermore may comprise a user input means 232 that allows communication with the application server device 102 and the data streaming means 206 via the network interface 218. User input provided to a server may initiate a server process on a processor 234, which communicates with a graphic system 236, a device driver 238 and thus may provide input to the graphics acceleration means 202, thus initiating or controlling streaming of video. In Fig. 6, an architecture for a similar application layer protocol is shown, except that both the graphic accelerator means 202 and the data streaming means 206 are in hardware and integrated on the same device, in the example shown the server device 102. The output then is a a data stream, e.g. video stream, that can be sent over any kind of network (wired or wireless) to a client device 104 capable of decoding a data stream, e.g. video stream.

The problem with continuous application layer protocols such as video-streaming is that it provides a continuous stream. Even when there is no user-interaction or there are no screen-updates due to application-progress, a fixed or variable number of frames per second are sent. If one is using recent video-codecs, the amount of bandwidth needed is very limited as e.g. with P-or B-frames only the differences are encoded and sent to the client but especially energy consumption, which is an issue for mobile devices which clients typically may be, must be taken into account. Using continuous application layer protocol, frames must be decoded continuously which requires processing power and especially when a client is provided with a wireless connection, data must be received continuously. E.g. with 802.11 wireless networks, the amount of data sent does not play an important role but the screen updating plays an important role concerning energy-consumption. Only when the interface goes in "dozing"-mode, a lot of energy can be saved.

It is to be noted that, in combination with the present invention, the data stream also may be adaptive which means that a separate control-channel can be used on which the thin client can send feedback to the server over the network in order to adapt the data stream, e.g. video stream, in correspondence with the network-conditions. If the client device is only capable of decoding e.g. simple MPEG-2 video streams it can tell this to the server, if the frame rate becomes to low or the bandwidth is very limited, a smaller screen size and a lower compression-technique, i.e. where more information is lost, can be used, etc.

The invention will further be described by a detailed description of aspects and several embodiments of the invention. It is clear that other embodiments of the invention can be configured according to the knowledge of persons skilled in the art without departing from the true spirit or technical teaching of the invention, the invention being limited only by the terms of the appended claims.

In a first aspect of the invention, the present invention relates to a method for handling graphical data between at least a server device 102 and at least a client device 104 connected by a network connection 106 in a network environment. The method typically comprises setting up a session between said at least one server device and said at least one client device. Such a session typically is initially set up between the server device 102 and the client device 104 which will then allow communication between the two devices at higher levels. The graphical data typically may originate from an interactive application run in a client - server configuration. With an interactive application there may be meant an application wherein besides an output towards the client device also an input from the client may occur. The graphic data may be graphical output or graphical input, such as video data or image related data. In a first embodiment, the method may comprise receiving graphic data, e.g. graphical output, of an application run in a client - server architecture, selecting from at least a first application layer protocol and at least a second application layer protocol a preferred application layer protocol to use and applying the selected application layer protocol for transmitting said graphical data. The at least a first application layer protocol or the at least a second application layer protocol thereby are continuous application layer protocols, e.g. related to streaming, whereas the others are discontinuous application layer protocols, such as for example but not limited to frame buffer application layer protocols, video device driver application layer protocols, low-level graphic library protocols or high-level graphic library protocols. The at least one first application layer protocols thereby differ from the at least one second application layer protocol in the way, e.g. timing, data, e.g. graphical data, are sent by the server device. In the present embodiment, the selection for handling graphical data thus is made between at least a at least one discontinuous application layer protocol and at least one continuous application layer protocol. The methods and systems of the present invention thereby are adapted to be able of handling data, e.g. graphical data according to both types of application layer protocol.

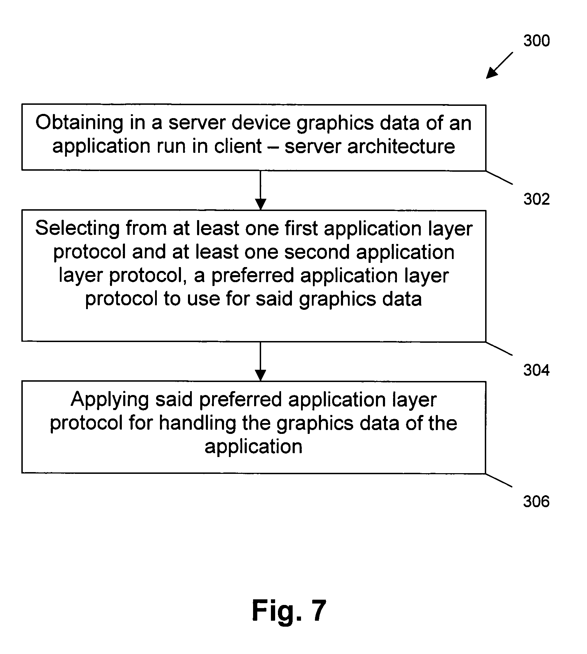

By way of example, different steps of an exemplary method 300 for handling graphical data between at least a server device 102 and at least a client device 104 connected by a network connection 106 in a network environment according to the above described embodiments is illustrated in Fig. 7. The step of setting up a session between the client device and the server device, typically performed in methods according to the present invention, is not shown in Fig. 7.

In a first step 302, graphic data, such as e.g. graphical output of an application run in a client -server architecture, is obtained in the server device 102. Such data typically is obtained in a graphics handling part of a server device and is received from the application run in a client -server architecture. Obtaining graphic data may comprise translating graphical input data into first graphic commands. Such graphical commands may be driver calls. The obtaining step typically is performed in an automatic and/or automated way. It typically may be performed by a first graphics handling means 802 of the server device 102. Such a graphics handling means may correspond with a graphic system as shown in Fig. 5 and Fig. 6

In a second step 304, selection of which protocol to be used is performed. As indicated the selection may be performed between any application layer protocol available on the server device and manageable by the client device, such as for examples all of the different application layer protocols as described above. Alternatively, according to the first embodiment, the selection also may be performed between continuous application layer protocols and discontinuous application layer protocols. Typical examples thereof are described in detail above. Selecting between discontinuous and continuous application layer protocols has the advantage that the resources of the network, client and/or server can be used in a more efficient way. A selection between application layer protocols may be based both on graphical data properties and resource constraints. With graphical data properties there is meant the number and amount of screen updates needed, the amount of graphical processing, such as for example graphics acceleration, triangulation, rendering, etc. needed, ... In other words the decision may e.g. be made based on the amount of graphics processing that is required. Typical examples of applications having a graphical output with a limit number of screen updates or where the relative amount of screen area to be updated is limited are for example spreadsheet applications, word-processing applications, static web browsing, photo-editing, etc. With resource constraints there may be meant the energy consumption in the client device, the processing power available in the client device and/or in the server device and/or the response time of the server and/or the bandwidth consumption occurring in the network. Selection of a protocol typically is performed in an automatic and/or automated way. The latter may e.g. be performed in a graphics protocol decision means comprising a driver decision module.

If an application is selected with a limited number of screen updates and/or wherein only a limited part of the screen is updated and/or where little graphical processing is needed, the selected protocol typically may be a discontinuous application layer protocol, such as e.g. a classic application layer protocol like for example any of a frame buffer application layer protocol, video device driver application layer protocol, a low-level graphics library protocol or a high-level graphics library protocol. The selected protocol may be based on low or basic graphic commands, e.g. lower or more basic graphic commands than for applications with a higher number of screen updates, with a higher relative part of the screen that is updated or requiring more graphical processing. Such protocols are ideally suited to send the screen updates to the client as these protocols typically are optimised for these kind of situations, re-use similar blocks of image-data as much as possible and limit the amount of bandwidth needed, e.g. if no user interaction occurs or no data is sent. With the classic thin client-protocols, packets are only sent when there are screen-updates, one avoids the overhead of de-and encoding a video stream and the network connection doesn't have to be in listening mode all the time which saves energy. Typically discontinuous application layer protocols require much less computations than continuous application layer protocols, e.g. streaming, because less decoding typically is needed in the graphical data. The latter may be an important factor regarding computing power and energy consumption.

If applications are run wherein typically a lot of screen updates are needed and/or wherein typically a lot of graphical processing unit action is required, the selected application layer protocol preferably is a continuous application layer protocol whereby the graphical data may be sent as a continuous data stream, e.g. a continuous real-time video stream. The continuous real-time video stream thereby may be encoded an highly compressed using one of the recent video-codecs, as described above. Alternatively or in combination thereto also high level classic application layer protocols may be selected, rather than low level classic application layer protocols or classic application layer protocols based on basic commands.

Selection of a particular application layer protocol may thus be based on resource constraints and/or graphical data properties for graphical data of an application. Selection of a continuous application layer protocol may be performed as soon hardware acceleration is required for handling the graphical data. The latter may especially be useful as some applications do not function on discontinuous application layer protocols when hardware acceleration is turned on. Consequently, evaluating the use of hardware acceleration for deciding the type of application layer protocol to be used may be preferred. Such a selection could e.g. also be based on whether or not the graphical data properties exceed predetermined values. For example a continuous application layer protocol may be selected if the refresh rate exceeds the value of refreshing more than 20%, e.g. more than 40%, e.g. more than 60%, e.g. more than 80% of the screen within 0.04s, e.g. within less than 0.1 s, e.g. within less than 0.3s, e.g. within less than 0.5s. A continuous application layer protocol also may be selected if the average time the graphic processing unit is used by the application exceeds more than 50%, e.g. more than 70%, e.g. more than 85% for a given time frame. A continuous application layer protocol may be selected if less than 70% of the available bandwidth is used, e.g. if less than 50% of the available bandwidth is used, e.g. if less than 30% of the available bandwidth is used. Alternatively, different suitable application layer protocols may be defined based on predetermined ranges of properties describing resource constraints and/or graphical data properties.

In a third step 306, the selected application layer protocol is applied for sending the graphical data, e.g. for transmitting the graphical data from the server device 102 to the client device 104. This step typically also may be performed in an automatic and automated way. Sending data typically is performed using a network, as described in more detail above.

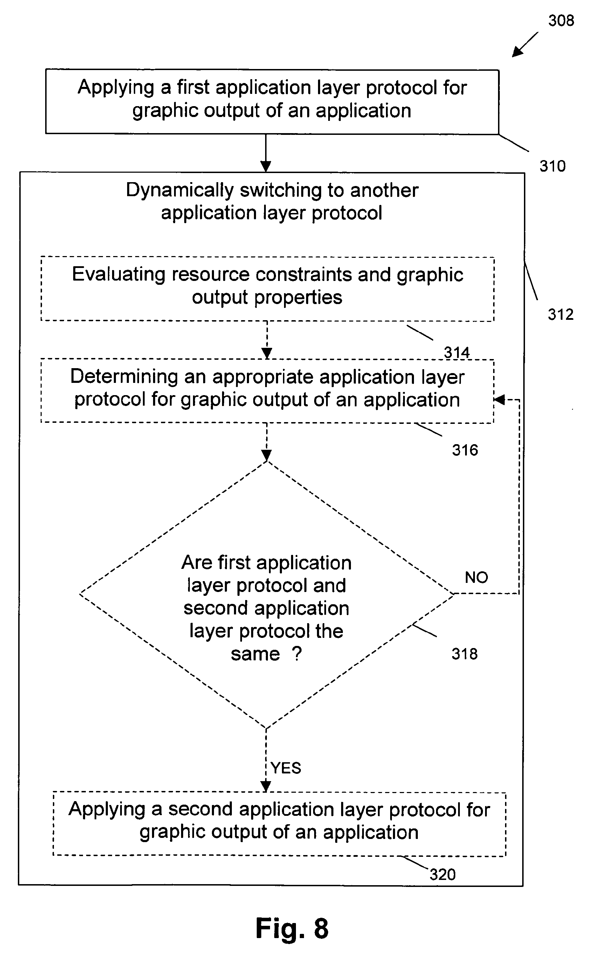

It is to be noted that the selection of an application layer protocol may not be a static selection that only occurs once for a single application, but that it may occur substantially continuously, i.e. also during running of the application. In a second embodiment according to the first aspect of the present invention, a method is described for handling graphical data transferred between at least a server device 102 and at least a client device 104 connected by a network connection 106 in a network environment, wherein during running of the application the application layer protocol is evaluated and possibly changed. The method typically comprises setting up a session between at least one server device and at least one client device. Such a session typically is initially set up between the server device 102 and the client device 104 which will then allow communication between the two devices at higher levels. The graphical data handled typically may originate from an interactive application run in a client - server configuration during such a session. The method comprises applying a first application layer protocol for handling the graphical data, e.g. graphical output of an application, and dynamically switching to a second application layer protocol based on resource constraints and/or graphic output properties of the application. After the switching the second application layer protocol thus is used. Again one of the first or second application layer protocol is either a continuous application layer protocol respectively a discontinuous application layer protocol as described in more detail in the first embodiment according to the first aspect of the present invention, whereas the other is a discontinuous application layer protocol respectively a continuous application layer protocol. The first application layer protocol thereby thus is different from and of a different type then the second application layer protocol. The secondembodiment is described in more detail with relation to Fig. 8, showing needed and optional steps for a method 308 for handling graphical data according to the second embodiment.

In a first step 310, a first application layer protocol is applied for handling graphical data, e.g. graphical output, of an application in a client - server configuration. Such an application layer protocol may be one of a continuous or a discontinuous application layer protocol.

In a further step 312, dynamical switching to another application layer protocol may be performed, depending on resource constraints and/or graphical output of an application. The latter thus may comprise the step of evaluating the resource constraints and/or graphical output of an application, indicated by step 314, selecting an appropriate application layer protocol suitable with these resource constraints and/or graphical output of an application, indicated by step 316, evaluating whether or not this application layer protocol is different from the first application layer protocol, indicated by step 318, and if the application layer protocol is different from the first application layer protocol, applying this second application layer protocol for handling graphical output of an application, as indicated in step 320. The latter process may be continuously or at predetermine time intervals repeated, such that typically always an efficient application layer protocol is used. Selection of an appropriate application layer protocol suitable with the resource constraints and/or graphical output properties of an application may be performed in the same way, comprising the same features and advantages as described for the selecting step 304 of the method 300 shown in Fig. 7.

In a third embodiment of the present invention, relating to a method for handling graphical data as described in any of the above embodiments thus comprising the same features and same advantages as described above, evaluation of the graphical output properties and/or the resource constraints comprises providing feedback about the graphical output properties and/or about the resource constraints for the client - server configuration and for the application run thereon. Providing feedback about the graphical output properties and/or about the resource constraints may comprise the detection of motion or activity in graphical data of an application, such as e.g. in video data. The amount of motion may be used for deciding which type of application layer protocol is used. Typical a motion detection means for detecting motion and/or for detecting the amount of motion in graphical data may be provided for performing this task. Typically when a significant amount of motion is detected in graphical data and the graphical data currently is handled using a classic, discontinuous, application layer protocol, the application layer protocol typically may be switched to a continuous, e.g. streaming, application layer protocol. The amount of motion typically can be numerically expressed by subtracting two successive images and using the residu as a determining factor for the amount of motion. The amount of motion thus may be expressed as the amount of pixels that changes between successive images. If the latter is above a predetermined level, switching to a continuous application layer protocol may be performed. Motion estimation, which is an algorithm known from video-encoding, also may be used. Alternatively or in combination therewith, evaluation of the graphical output properties and/or the resource constraints also may comprise the detection of the client's power consumption or the remaining power, the detection of the amount of bandwidth available for use in the network connection between the client device and the server device and/or the detection of the amount of processing power available on both or either of the client device 104 and/or the server device 102.

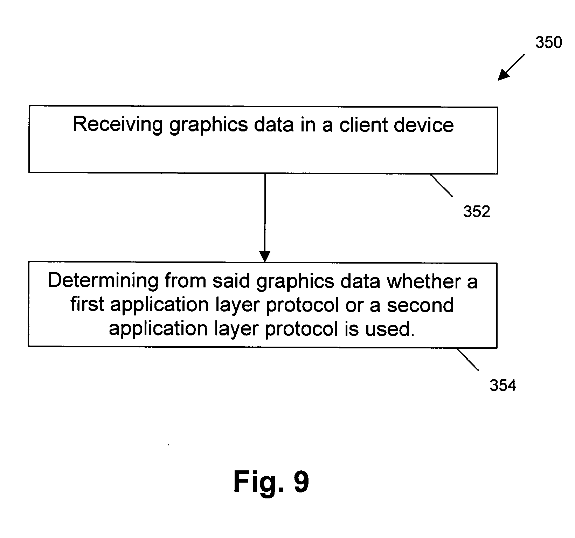

In a fourth embodiment according to the first aspect, the present invention relates to a method for handling graphical data of an application run in a client - server architecture, whereby the method comprises receiving graphical data sent from a server device to a client device and whereby the method furthermore comprises determining from the graphical data whether a first application layer protocol is used or a second application layer protocol is used. The method typically includes setting up a session between at least one server device and at least one client device. Such a session typically is initially set up between the server device 102 and the client device 104 which will then allow communication between the two devices at higher levels. The first application layer protocol and the second application layer protocol may be any of the application layer protocols as described above. Determining thereby may comprise determining from the graphics date whether a continuous application layer protocol is used or a discontinuous application layer protocol is used. By way of illustration, an example method according to the present embodiment is shown in Fig. 9 The method 350 comprises a first step 352 comprising receiving graphical data in a client device from a server device and a second step 354 comprising determining from the graphical data whether a first application layer protocol or a second application layer protocol is used. The method may furthermore optionally comprise providing feedback to the server system for altering the application layer protocol based on resource constraints, e.g. based on power consumption of the client device, available bandwidth, or other constraints described in other embodiments of the first aspect of the present invention.

A further embodiment according to the first aspect of the present invention relates to a method for handling graphical data as described in any of the above embodiments, whereby the dynamical switching from a first application layer protocol to a second application layer protocol comprising synchronising said handling graphical data with said first application layer protocol and said handling graphical data with said second application layer protocol such that the dynamically switching is invisible to a user of the client device 102. The latter may for example be implemented by using the last frame of streamed data as a first image of the first data packet produced using the discontinuous application layer protocol or using the last data of the last data packet produced using the discontinuous application layer protocol as the first data of the streaming data in the continuous application layer protocol.

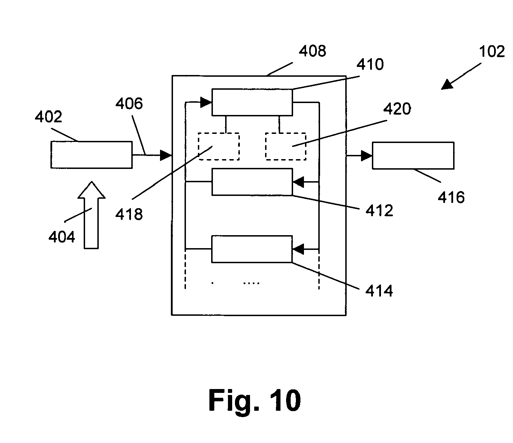

In a second aspect, the present invention relates to a server device suitable for handling graphical data, e.g. transmitting graphical output, of an interactive application in a network environment with at least one client. The server device is adapted for handling and sending graphical data of an application to at least one client using a first application-layer protocol and is adapted for dynamically switching between a first application-layer protocol and a second application-layer protocol for sending the graphical output, based on graphical data properties and/or resource-constraints of at least one component of the network environment. The resource constraints may be the energy consumption in the client device, the processing power available in the client device and/or in the server device and/or the response time of the server and/or the bandwidth consumption occurring in the network and/or the response time of the server. The at least one component of the network that may play a role in the dynamically switching may be the at least one client device, the at least one server device or the network connection. With graphical data properties there is meant the number and amount of screen updates needed, the amount of graphical processing, such as for example graphics acceleration, triangulation, rendering, etc. needed, ... Typically the server device is adapted for setting up a session with a client device, allowing further communication on a higher level. The server device typically may comprise a processor, a volatile memory, an operating system, an application program, a server agent, a persistent storage memory and a network interface. The server device of the present embodiment is adapted for selecting between different protocols. Different hardware components, software components or combined hardware and software components may be provided in order to obtain such a selection. These components are illustrated by way of example in Fig. 10. The server device 102 typically comprises a graphics system 402 for handling graphical data. Such a first graphics system 402 receives graphical input data 404 from the application. The first graphics system 402 typically translates the graphical input data 404 into first graphics commands 406, these first graphics commands 406 being sent to a graphics protocol decision means 408. In most circumstances, these "commands" will be normal driver-calls. The graphics protocol decision means 408 typically may consist of hardware components, software components or a combination of hardware and software components. One of these components typically is a driver decision module 410, which can decide which type of application layer protocol will be used. Different application layer protocols may be used, a number of examples thereof being described in more detail above. The driver decision module 410 thus selects from at least a first, discontinuous application-layer protocol and a second, continuous application-layer protocol which is the most appropriate protocol to be used. The latter typically is based on the graphical output properties of the graphical data present in an application and on typical resource constraints e.g. related to network related components. The driver decision module 410 may comprise a first, discontinuous application layer protocol means 412 for applying a first, discontinuous application layer protocol to the graphical data and at least a second continuous application layer protocol means 414 for applying a second continuous application layer protocol to the graphical data. The discontinuous application-layer protocol means 412 may e.g. be a means for handling a frame-buffer thin client protocol, a video-device thin client protocol, a low-level graphic library thin client protocol or a high-level graphic library thin client protocol, the invention not being limited thereto. The continuous application-layer protocol means 414 typically may provide streaming of the graphical output of an application such that a real-time or nearly real-time input, i.e. with a delay of less than a few sequences of frames, e.g. a delay of less than the showing time of one sequence of frames, is generated for the client device. The at least one discontinuous application-layer protocol means 412 and the at least one continuous application-layer protocol means 414 typically also take care off the packetization of the data. Alternatively, separate means for providing packetisation also may be provided. The graphics protocol decision means 408 typically sends the results to the network-module, thus allowing to transfer the graphical output to a client device.

The decision for selecting between at least a continuous application-layer protocol and at least a discontinuous application layer protocol, typically will depend on the graphical data properties of the application used or on resource constraints in the client - server network where the server is used in. It may be made based on the amount of hardware acceleration required for processing the graphical output. If an application highly depends on hardware-acceleration, it typically may be encoded in real time and transmitted using a continuous application-layer protocol, e.g. be streamed, after graphics processor unit-acceleration took place.

In a particular embodiment, the driver decision module 410 is provided with a feedback information means 418 for providing feedback information. The feedback information may be generated based on info from the first application-layer protocol means 412 and/or the second application-layer protocol means 414. Such feedback information means 418 may for example comprise a motion and/or activity detection means or a means providing information about similarities between 2 successive frames in a frame-based graphical output. When for example an application is transmitted using a continuous application-layer protocol means 414 and the amount of motion or differences detected between 2 successive frames is below a certain threshold, the driver decision module 410 can decide to switch to use of a discontinuous application-layer protocol means 412. Alternatively if for example an application that is transmitted using a discontinuous application-layer protocol means 412 the amount of motion or differences between 2 successive frames is above a certain threshold, the driver decision module 410 can decide to switch to use of a continuous application layer protocol means 414. In other words, switching between continuous and discontinuous application-layer protocol means may be performed according to the amount of motion. Besides or in combination therewith a motion detection system, the feedback information means 418 may also provide feedback information about graphical data properties and/or by a means determining resource constraints.

The graphics protocol decision means 408 may be adapted to make a "switch" between a first application-layer protocol and a second application-layer protocol transparently, i.e. invisible, for the end-user, e.g. for making the switch between a continuous application layer protocol and a discontinuous application layer protocol invisible for the end-user. In the latter case, one possible implementation can be to use the last frame of the continuous application-layer protocol as the first frame buffer-picture in the discontinuous application layer protocol. The graphics protocol decision means 408 thus may be adapted with a synchronisation means 420 for synchronising graphical data handled with a first, discontinuous, application layer protocol to subsequent graphical data handled with a second, continuous, application layer protocol or vice versa.

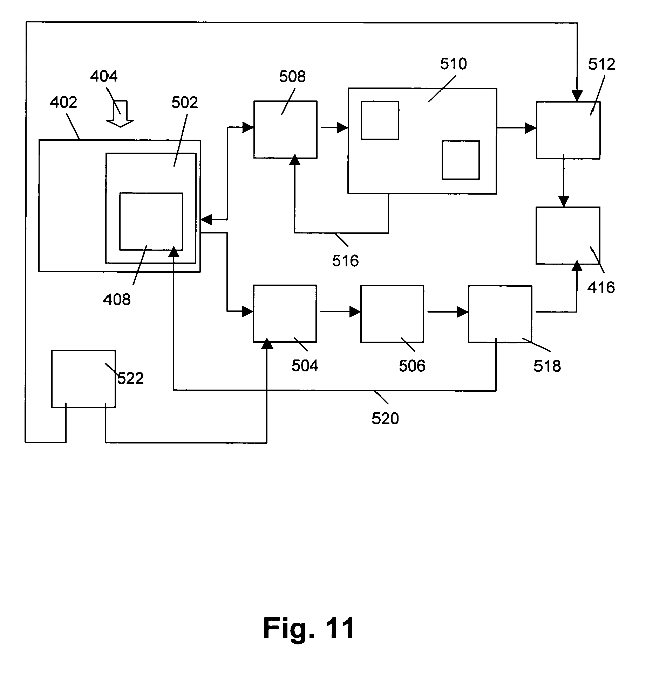

Fig. 11 illustrates a particular embodiment of a graphical processing part of a server device 102 according to the present aspect of the invention. As stated earlier, an end-user application typically may provide graphical input data 404, such as commands which typically may be function calls to a first graphical system 402. The first graphical system 402, which may e.g. be a Xorg or XFree86 system, typically may use a video-device driver to instruct a graphics hardware card with a GPU. In the system of the present embodiment a pseudo voltage driver 502 may be used as video-device driver and loaded into the first graphical system 402. This pseudo voltage driver 502 may be a voltage driver for 2 other drivers: a native device driver 504 which actually instructs the graphics processing means 506, such as the graphic accelerator or graphics card with graphics processing unit, and a pseudo-device driver 508, e.g. VNC-like. The pseudo-device driver 508 typically is used for applications that do not require GPU-acceleration and the graphical data may be written to e.g. a frame buffer 510 in memory, as is the case with the classic remote frame buffer application layer protocol in VNC. This data may be packetised, compressed, cached by a caching , compression and packetisation means 512 and eventually sent to a network interface 416 to be sent to a client device 104. A motion-detection means 514, e.g. a computer program product comprising an algorithm for motion detection, may be present and executed frequently in the frame buffer 510 on the frame buffer data in order to detect if there are a lot of differences between successive frames. Motion feedback information 516 may be sent back to the pseudo device driver 508 on a regular basis, which in his turn may instruct the driver decision module 408 of the pseudo voltage driver 502 to use the native device driver 504 from the graphics processing means 506 and use a continuous application layer protocol, such as streaming the application instead of using a discontinuous application layer protocol. If an application is streamed, this streaming may be done after processing by the graphics processing means 506 using a data streaming means 518, such as e.g. a real time video encoder. The latter can be hardware, software and may be a separate module and comprises the same features and advantages as the data streaming means described in Fig. 5 and Fig. 6. The data streaming means 518 typically provides its output to the network interface 416 to provide a data stream to the client device 104. The data streaming means 518 furthermore may sent motion feedback information 520 to the driver decision module 408. If the amount of motion in the video-stream is below a certain threshold, the driver decision module 408 can once again decide to use for the same application a discontinuous application layer protocol. The exact composition of the pseudo voltage driver 502 may be decided by the implementer: one can e.g. using the 2 original drivers as a DLL, the pseudo-device driver 504 and pseudo-voltage-driver 508 can be integrated, or even the three drivers can be integrated if performance is an issue. Furthermore, the number of drivers may be larger such that selection between more than two different application layer protocols may be performed. A further component may be a client feedback listening module 522, which may be a software-daemon that receives input from the client when e.g. packet-loss or delay becomes to high. The latter communicates to different components of the graphics part of the server device. The server device, being a hybrid application layer protocol server device, can use this information to e.g. adapt video-quality or to use another kind of compression for the discontinuous application layer protocol. The hybrid server device typically may also be able to receive user-input from the client. Such input typically is sent to the graphical subsystem which interprets this correctly. The latter is not indicated in Fig. 11. It is to be noted that a synchronisation means (not shown in Fig. 11, may be present or may communicate with the driver decision model to provide synchronisation between different application layer protocol such that the switch-operation between different application layer protocols may be completely invisible for the end-user. As mentioned earlier, for example the last frame of a video-stream, it is graphical data handled using a continuous application layer protocol, can be used as the first frame buffer content of graphical data handled using a discontinuous application layer protocol. Alternatively after a last frame buffer content is provided by a discontinuous application layer protocol, subsequent graphics information may be present as initial part of graphical data handled with a discontinuous application layer protocol.

In a third aspect, the present invention relates to a client device 104 adapted for handling graphical data of an application run in a client - server system, whereby the graphical data is sent using any of at least one first application layer protocol or at least one second application layer protocol. The client device 104 typically is adapted for determining from the graphical data which of a first application layer protocol or of at least one second application layer protocol has been used. Typically the client device is adapted for setting up a session with a server device, allowing further communication on a higher level. Typically the client device may comprise an interpretation means allowing interpretation of which of both said first application layer protocol and said at least one second application layer protocol are used. Furthermore, the client device 104 may be adapted for handling both data handled according to a first application layer protocol and data handled according to at least one second application layer protocol. Typically both a means for handling graphical data handled according to a first application layer protocol and a means for handling graphical data handled according to a second application layer protocol may be present. The system also may be adapted for handling graphical data which may be handled using one of more than two application layer protocols, i.e. the interpretation means may be adapted thereto and additional means for handling graphical data handled according to a third or further application layer protocol may be present. In a preferred embodiment, the client device comprises the same features as the client device described above, but the first application layer protocol is a discontinuous application layer protocol, whereas the second application layer protocol is a continuous application layer protocol.

The client device 104 typically may be adapted for determining the application layer protocol used for the graphical data of the application substantially continuously or at regular time intervals such that a dynamical switch of application layer protocol for the graphical data of an application can be handled by the client device 104. The application may be an interactive application. The graphical data typically may be graphical output data from an application running on a server sent to the client, although the system also may be adapted for handling graphical input data from the client device using different application layer protocols, e.g. if the client device is adapted therefore. The client device 104 typically may be a thin client device. Other features of the client device 104 may be as described in more detail above, comprising the same advantages.

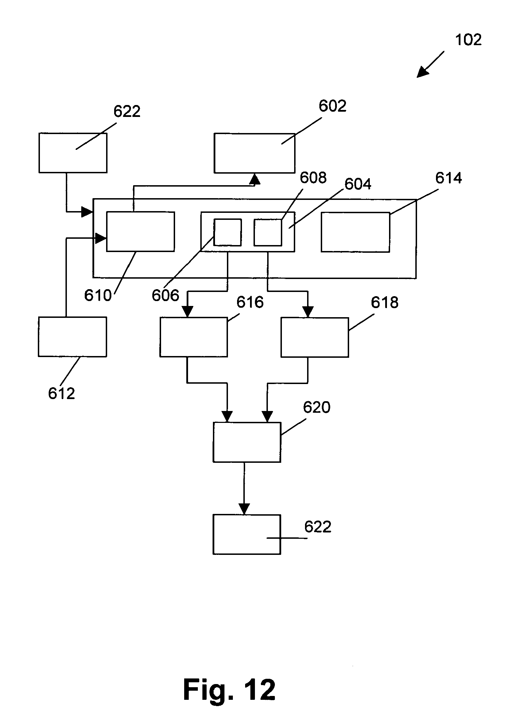

By way of illustration, an exemplary embodiment of a client device adapted for handling data handled with a first or at least a second application layer protocol is shown in Fig. 12, the invention not being limited thereto. The client device 104 is connected via a network, as described in more details above, with a server device 102. The client device therefor typically may comprise a network interface 602. It furthermore typically may comprise an interpretation means 604, which typically may comprise a depacketization means 606 for receiving network packets from the network connection and an interpretation module 608 for interpreting network packets correctly as packets belonging to graphical data handled according to a first, e.g. discontinuous, application layer protocol or graphic data handled according to a second, e.g. continuous, application layer protocol. The client device 104 also may comprise a user-input processing module 610 which receives user interaction-events from the user via user input equipment 612 and sends them via the network interface to the server device over the network. A protocol feedback module 614 may be present which may be tightly connected with the depacketization means 606 and interpretation-module 608 and which may detect packet-loss, dire video quality etc. This protocol feedback module 614 can send feedback to the server 102 in order to adapt the video-quality or classic-thin client-protocol-quality to a lower one or higher compression, or can request another screen-size. This protocol feedback module may be optional. Depending on the protocol used the graphical data is sent to a first application layer protocol data handling means 616, e.g. a discontinuous application layer protocol handling means or to a second application layer protocol data handling means 618, e.g. a continuous application layer protocol handling means, such as e.g. a data and/or video decoding module. These write the correct graphical data to a memory-space for graphic storage 620, which in most cases will be a frame buffer. The latter then is outputted to an output means 622, such as e.g. a screen or display. A power source 624 typically also is present and properties thereof may be used as feedback information to the server device 102 to decide which application layer protocol is most appropriate.
In an embodiment of the fourth aspect, the present invention relates to a client - server system, e.g. a thin client - server system, that is adapted for transmitting the graphical data of an application, e.g. interactive application, from a server device to a client device of the client - server system, with a first application-layer protocol and dynamically switching to a second application-layer protocol based on resource-constraints of a component of the network. The client - server system 100 may be a system as shown in Fig. 1, but it typically comprises at least one server device 102 as described in the second aspect of the present invention, comprising the same features and advantages as described in at least one of the above described embodiments according to the second aspect of the present invention. Typically the client - server system 100 is adapted for setting up a session between a client device and a server device, allowing further communication between the client device and the server device on a higher level. The client - server system 100 furthermore comprises at least one client device 104 as described in the third aspect of the present invention, comprising the same features and advantages of the client device of at least one of the above described embodiments according to the third aspect of the invention. The server device 102 and the client device 104 thereby are adapted such that they can both handle the same at least one discontinuous application-layer protocol and at least one continuous application-layer protocol. The client device and the server device typically are connected in a network 106 via a network connection. Such a connection may be any type of network connection such as a local area network (LAN), a medium area network (MAN) or a wide area network (WAN), such as the Internet or the World Wide Web. Such a network may be a wired or wireless network. Small networks, such as LANs, may e.g. be based on infrared communication technology, e.g. based on Bluetooth or IEEE 802.11 communication standards.
In a fifth aspect, the present invention relates to a computer program product for organising the handling of graphical data, such as e.g. graphical output, of applications, such as interactive applications, in a client - server architecture whereby the computer program product comprises a means for preparing and transmitting the graphical output of a user application. The means for preparing and transmitting the graphical output is adapted for preparing and transmitting the graphical output according to a first application-layer protocol and is adapted for dynamically switching to preparing and transmitting the graphical output according to a second application-layer protocol. The computer program product may be a software application product. The computer program product may be especially suitable for being implemented on a server device as described in the second aspect of the present invention, in a client - server device as described in the fourth aspect of the present invention and/or in a method for handling graphical data of an interactive application according to the first aspect of the present invention.
In a sixth aspect, the present invention relates to a computer program product for organising the handling of graphical output of applications, such as interactive applications, in a client - server architecture whereby the computer program product comprises a means for receiving and handling the graphical output of a user application at the client side, wherein the means for receiving and handling the graphical output is adapted for receiving and handling the graphical output according to a first application-layer protocol and is adapted for dynamically switching to receiving and handling the graphical output according to a second application layer protocol. The computer program product may be a software application product. The computer program product may be especially suitable for being implemented on a client device as described in the second aspect of the present invention, in a client - server device as described in the fourth aspect of the present invention and/or in a method for handling graphical data of an interactive application according to the first aspect of the present invention.

The computer program products of the fifth and the sixth aspect of the present invention typically provide the functionality of a method for preparing and transmitting respectively a method for receiving and handling graphical output of an application when executed on a computing device. These may be in the form of a hardware component, such as e.g. a general purpose processor, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. Furthermore, the fifth and sixth aspect of the invention can be implemented in a computer program product tangibly embodied in a carrier medium carrying machine-readable code for execution by a programmable processor. Further, the present invention includes a data carrier such as for example a CD-ROM or a diskette which stores the computer product in a machine-readable form and which executes at least one of the methods of the invention when executed on a computing device. Nowadays, such software is often offered on the Internet or a company Intranet for download, hence the present invention includes transmitting the computer product according to the present invention over a local or wide area network.
It is an advantage of embodiments of the present invention that architectures which use both protocols are provided, depending on the kind of application and the number of screen updates.

It is also an advantage of embodiments of the present invention that existing application do not need to be modified for use with the client - server system using the hybrid protocol model according to the present invention.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. A method (308) for handling graphical data of an interactive application in a network environment comprising at least one server device (102), at least one client device (104) and a network connection (106) between said at least one server device (102) and said at least one client device (104), the method comprising:
- setting up a session between said at least one server device (102) and said at least one client device (104),
- handling (310) said graphical data using a first application layer protocol, and
- dynamically (312) switching between said first application layer protocol and at least a second application layer protocol for handling said graphical data, said dynamical switching being based on resource-constraints of a component of said network environment and/or properties of said graphical data, wherein one of said first application layer protocol and said at least one second application layer protocol is a discontinuous application layer protocol whereas said other application layer protocol is a continuous application layer protocol.

2. A method (308) for handling according to claim 1, wherein said continuous application layer protocol is an application layer protocol allowing graphics hardware acceleration on said server device (102).

3. A method (308) for handling according to any of the previous claims, wherein handling said graphical data comprises preparing and sending graphical data from a server device (102).

4. A method (308) for handling according to any of the previous claims, wherein handling said graphical data comprises receiving and outputting graphical data on a client device (102).

5. A method (308) for handling according to any of the previous claims, wherein said dynamically switching comprises evaluating at least one of said resource constraints and said graphic output properties.

6. A method (308) for handling according to claim 5, wherein said evaluating comprises detecting the amount of motion present between two subsequent image related data parts of the graphical data.

7. A method (308) for handling according to any of the previous claims, wherein dynamically switching (312) is switching to a continuous application layer protocol if at least a predetermined degree of hardware acceleration is required and/or if at least a predetermined amount of motion is present between two subsequent image related data parts of the graphical data and to a discontinuous application layer protocol if less than a predetermined degree of hardware acceleration is required and/or if less than a predetermined amount of motion is present between two subsequent image related data parts of the graphical data.

8. A method (308) for handling according to any of claims 1 to 8 wherein dynamically switching (312) from a first application layer protocol to a second application layer protocol comprising synchronising said handling graphical data with said first application layer protocol and said handling graphical data with said second application layer protocol such that the dynamically switching is invisible to a user of the client device (104).

9. A method (300) for handling graphical data of an interactive application in a network environment comprising at least one server, at least one client and a network connection between said at least one server and said at least one client, the method comprising:
- setting up a session between said at least one server device (102) and said at least one client device (104),
- obtaining (302) in said at least one server device (102) graphical data of said application
- selecting (304) from at least one first application layer protocol and at least one second application layer protocol a preferred application layer protocol to be used
- applying (306) said preferred application layer protocol for handling said graphical data.

10. A method (300) for handling graphical data of an interactive application in a network environment comprising at least one server, at least one client and a network connection between said at least one server and said at least one client, the method comprising
- setting up a session between said at least one server device (102) and said at least one client device (104),
- obtaining (352) in said at least one client device (104) graphical data of said application
- determining from said graphical data whether a first application layer protocol or a second application layer protocol is used.

11. A client device (104) for use in a client - server configuration, wherein the client device (104) is adapted for handling graphical data of an interactive application sent during a session, the graphical data being handled using at least one first application layer protocol and subsequently at least one second application layer protocol, wherein one of said at least one first application layer protocol and said at least one second application layer protocol is a discontinuous application layer protocol whereas said other application layer protocol is a continuous application layer protocol.

12. A client device (104) for use in a client - server configuration, wherein said client device comprises at least one discontinuous application layer protocol data handling means and at least one continuous application layer protocol handling means and an interpretation means for allowing interpretation during said session of which of both said first application layer protocol and said at least one second application layer protocol are used.

13. A server device (102) for use in a client - server configuration, wherein the server device (102) is adapted for handling graphical data of an interactive application during a session and is adapted for dynamically switching between a first application-layer protocol and a second application-layer protocol for sending the graphical data, based on graphical data properties and/or resource-constraints of at least one component of the network environment, wherein one of said first application layer protocol and said at least one second application layer protocol is a discontinuous application layer protocol whereas said other application layer protocol is a continuous application layer protocol.

14. A server device (102) according to claim 13, said server device (102) comprising a means for dynamically switching between the at least one first application layer protocol and the at least one second application layer protocol transparently for an end-user of the client device (104).

15. A server device (102) according to claim 19, wherein said server device (102) comprises a feedback information means (418) for providing feedback information to said means for dynamically switching.

16. A system for performing client - server operation comprising a network, at least one client device (104) as describe in any of claims 11 to 12 and a server device (102) as described in any of claims 13 to 15.

17. A computer program product for organising the handling of graphical data of an interactive application in a client - server network, the computer program product comprising a means for, during a session between at least one server device (102) and at least one client device (104), preparing and transmitting the graphical output of a user application, wherein the means for preparing and transmitting the graphical data is adapted for preparing and transmitting the graphical data according to a first application-layer protocol and is adapted for dynamically switching to preparing and transmitting the graphical data according to a second application-layer protocol, wherein one of said first application layer protocol and said second application layer protocol is a discontinuous application layer protocol whereas said other application layer protocol is a continuous application layer protocol.

18. A computer program product for organising the handling of graphical data of an interactive application in a client - server network, the computer program product comprising a means for, during a session between at least one server device (102) and at least one client device (104), receiving and handling the graphical output of a user application at the client side, wherein the means for receiving and handling the graphical output is adapted for receiving and handling the graphical output according to a first application-layer protocol and is adapted for dynamically switching to receiving and handling the graphical output according to a second application layer protocol, wherein one of said first application layer protocol and said second application layer protocol is a discontinuous application layer protocol whereas said other application layer protocol is a continuous application layer protocol.

19. A machine readable data storage device storing any of the computer program products of claims 17 or 18.

20. Transmission of any of the computer program products of claims 17 or 18 over a local or wide area telecommunications network.
